# FASCICULE DE BREVET EUROPEEN

(11) **EP 2 837 557 B1**
(45) Date de publication et mention de la délivrance du brevet: **15.06.2016**
(21) Numéro de dépôt: 14178051.0
(22) Date de dépôt: 22.07.2014
(51) Int. Cl.: B64C 25/40

(54) **Dispositif de couplage d'une roue motorisée de train d'atterrissage d'aéronef**
Kupplungsvorrichtung eines motorisierten Fahrwerkrads eines Luftfahrzeugs
Device for coupling a motor-driven landing gear wheel of an aircraft

(30) Priorité: 31.07.2013 FR 1357609
(43) Date de publication de la demande: 18.02.2015
(73) Titulaire: Airbus Operations, 31060 Toulouse (FR)
(72) Inventeur: Tizac, Laurent, 31170 TOURNEFEUILLE (FR); Lesage, Cédric, 31300 TOULOUSE (FR)
(74) Mandataire: Santarelli

(56) Documents cités:
- WO-A1-2014/023939
- FR-A1- 2 954 752
- US-A1- 2010 288 873

## Description

L'invention concerne un dispositif élastique de couplage entre une roue de train d'atterrissage d'aéronef et un organe coaxial de motorisation de ladite roue, ainsi qu'un train d'atterrissage équipé d'un dispositif de motorisation de roue et d'un tel dispositif de couplage.

Pour des raisons d'économie de carburant, de réduction de bruit, de limitation de la durée de fonctionnement et donc de l'usure des moteurs des avions (turboréacteurs, turbopropulseurs ...), etc., il a été proposé de motoriser des roues de leurs trains d'atterrissage afin de permettre leur déplacement autonome sur les plates-formes aéroportuaires.

Il est connu d'assurer cette motorisation d'une roue de train d'atterrissage au moyen d'un dispositif de motorisation comprenant un moteur, par exemple électrique, un dispositif réducteur et un dispositif de couplage en rotation entre la sortie du dispositif réducteur et la jante de la roue.

Par ailleurs, lorsqu'un avion roule au sol, les essieux et les roues des trains d'atterrissage subissent des déformations importantes en raison du poids de l'avion transmis aux essieux par les jambes de train d'atterrissage.

Il est donc nécessaire que le dispositif de couplage entre la roue, qui se déforme, mais aussi suit les déformations de l'essieu, et l'ensemble moteur/réducteur, qui est solidaire de la jambe de train d'atterrissage, soit en mesure d'absorber ces déformations.

Pour tenter de résoudre ce problème, il est connu du document FR 2954752 un dispositif dans lequel une couronne d'entraînement de l'ensemble moteur/réducteur est reliée à la jante de roue par des ressorts métalliques qui permettent d'absorber des déformations ou des déplacements de la jante par rapport à la couronne.

Cependant, un tel dispositif ne permet pas une transmission optimale du couple entre la couronne d'entraînement et la roue.

L'invention vise à fournir un dispositif de couplage entre une roue de train d'atterrissage d'aéronef et un organe coaxial de motorisation de ladite roue qui permette d'assurer une transmission optimale de couple entre ledit organe de motorisation et la roue en dépit des déformations de l'essieu portant celle-ci, et qui n'affecte sensiblement pas la complexité et la durée des opérations de montage et démontage de la roue.

A cet effet, l'invention a pour objet un dispositif élastique de couplage entre une roue de train d'atterrissage d'aéronef et un organe coaxial de motorisation de ladite roue, ce dispositif comprenant les caractéristiques de la revendication.

Le dispositif selon l'invention permet, au moyen d'une structure légère qui ne grève pas significativement le poids de l'aéronef, d'assurer une très bonne transmission du couple entre l'organe de motorisation et la roue tout en permettant des débattements de celle-ci dus aux déformations de l'essieu sur lequel elle est montée.

Selon une caractéristique de l'invention, lesdits bras sont solidaires d'un moyeu adapté pour être fixé audit organe rotatif de motorisation. Le dispositif de couplage se présente ainsi comme une pièce en forme d'étoile facile à optimiser du point de vue poids et à rendre solidaire en rotation avec l'organe de motorisation, par exemple une roue dentée.

Selon une autre caractéristique possible de l'invention, lesdits bras sont adaptés pour être reçus, à leur extrémité radialement extérieure, en appui dans des logements respectifs d'une jante de ladite roue. Ce mode de liaison très simple participe à la limitation du poids induit par la motorisation de la roue et à la facilité de montage et démontage de celle-ci.

Selon une autre caractéristique possible de l'invention, lesdits logements ont sensiblement une forme de gouttière à section en U ouverte à l'une de ses extrémités et lesdits bras présentent à ladite extrémité radialement extérieure une noix allongée adaptée pour être reçue dans l'un desdits logements. Cette caractéristique permet de faciliter le maintien en prise des bras avec la jante malgré un déplacement axial relatif de l'extrémité d'un bras et du logement correspondant dans la jante en raison des déformations de l'essieu.

Selon une autre caractéristique possible de l'invention, lesdits bras sont dimensionnés pour que, dans la position montée de ladite roue sur ledit train d'atterrissage, ils soient précontraints axialement. Cette caractéristique conjuguée à a précédente permet de limiter les débattements axiaux des noix dans les logements, et donc d'optimiser la longueur de ces derniers.

Selon une autre caractéristique possible de l'invention, la longueur desdits logements est adaptée pour assurer la retenue desdites noix indépendamment de l'angle de carrossage de ladite roue. Cette caractéristique assure que tous les bras participent à la transmission du couple, indépendamment des déformations de l'essieu.

Selon une autre caractéristique possible de l'invention, lesdits logements sont ménagés dans une couronne solidaire de ladite jante. Des roues conventionnelles auxquelles une couronne a été fixée par soudage ou autre peuvent donc être utilisées avec un dispositif de motorisation.

Selon une autre caractéristique possible de l'invention, lesdits logements et lesdites noix sont des pièces d'usure amovibles. Ces pièces d'usure peuvent donc être remplacées pour un coût limité.

Selon une autre caractéristique possible de l'invention, lesdits bras sont en forme de lames. Il s'agit là d'une structure qui offre simplicité et légèreté pour permettre la transmission du couple malgré des déformations de l'essieu.

Selon une autre caractéristique possible de l'invention, lesdites lames ont une section plus faible du côté de leur extrémité radialement extérieure que du côté de leur extrémité radialement intérieure. Il est ainsi possible de donner facilement en fonction de leur largeur et/ou leur épaisseur des caractéristiques de flexibilité voulues aux lames.

L'invention a également pour objet un train d'atterrissage d'aéronef comprenant au moins une roue, un dispositif de motorisation de ladite roue comportant ledit organe de motorisation, et un dispositif de couplage tel que défini ci-dessus. Un tel train d'atterrissage permet de limiter sensiblement l'augmentation de poids liée à la motorisation d'une ou plusieurs roues.

Enfin, l'invention a encore pour objet un aéronef comprenant au moins un train d'atterrissage tel que défini ci-dessus.

D'autres caractéristiques et avantages de l'invention ressortiront de la description qui va suivre d'un mode de réalisation donné uniquement à titre d'exemple et illustré par les dessins annexés sur lesquels :

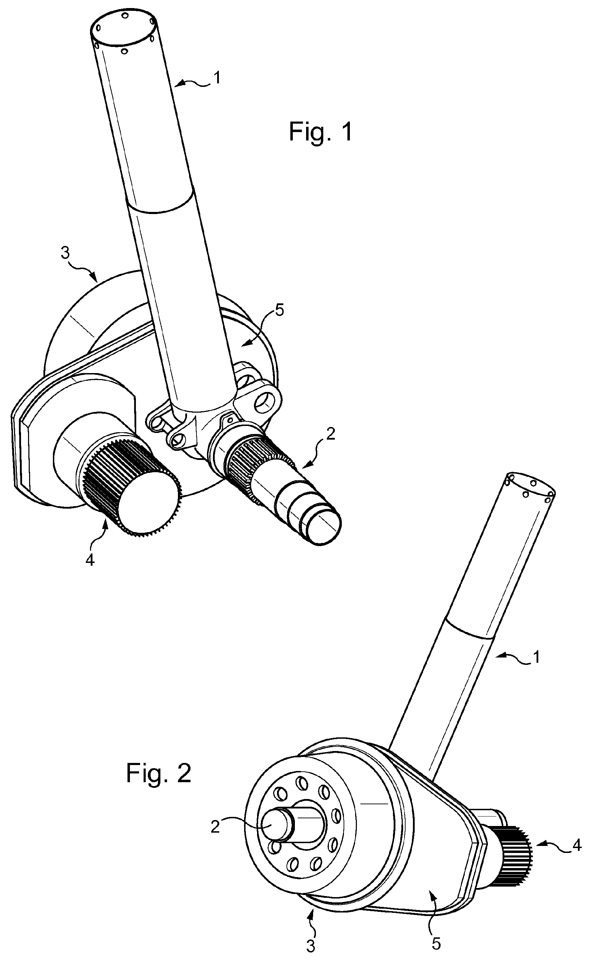

- la figure 1 est une vue partielle en perspective d'un train d'atterrissage équipé d'une disposition de motorisation de roue ;
- la figure 2 est une vue en perspective similaire à la figure 1 montrant la jante de roue en premier plan ;
- la figure 3 est une vue partielle en coupe des organes représentés aux figures 1 et 2, suivant un plan contenant l'axe du moteur et l'axe de l'essieu ;

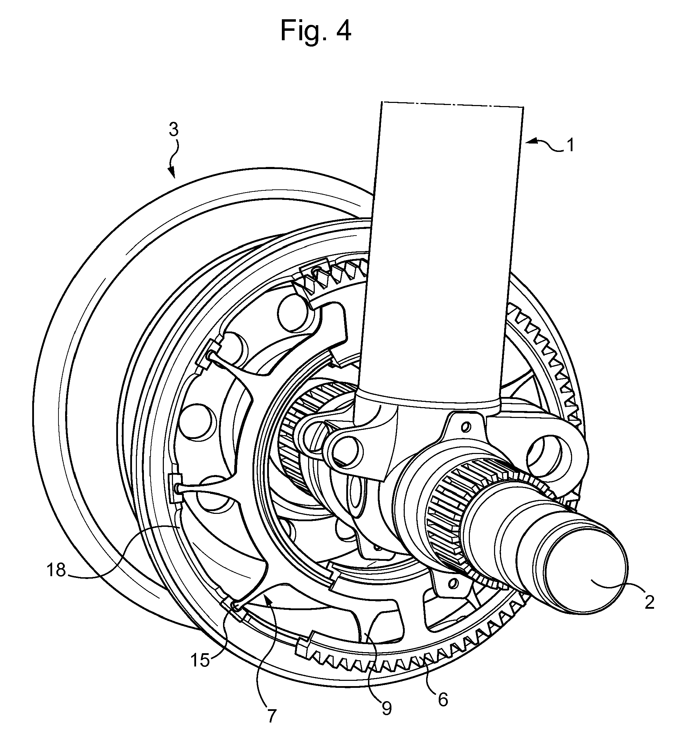

- la figure 4 est une vue en perspective avec arrachements partiels de la jante de joue et du dispositif de couplage entre celle-ci et le dispositif de motorisation ;
- la figure 5 est une vue en plan montrant le dispositif de couplage de la figure 4 et un pignon de sortie du dispositif de motorisation ; et
- la figure 6 est une vue partielle en perspective illustrant des parties du dispositif de couplage.

En se reportant aux figures, une jambe 1 d'un train d'atterrissage (non représenté en détail) d'un avion (non représenté) porte à son extrémité un essieu 2 sur lequel est montée une jante 3 de roue dont le pneumatique n'a pas été représenté.

Un ensemble de motorisation de roue comprenant un moteur électrique 4 et un dispositif réducteur 5 est monté sur l'essieu 2. En variante le moteur 4 pourrait être un moteur hydraulique.

Le dispositif réducteur 5 ne sera pas décrit en détail. Il peut être d'un type conventionnel bien connu de l'homme de métier. Il peut être aussi du type à élément pendulaire comme décrit dans la demande de brevet EP-2 527 249. Le dispositif réducteur 5 comporte un pignon ou roue dentée de sortie 6 susceptible d'être entrainé en rotation autour de l'essieu 2 lorsque le moteur 4 est en rotation.

La roue de sortie 6 est couplée à la jante 3 au moyen d'un dispositif de couplage 7.

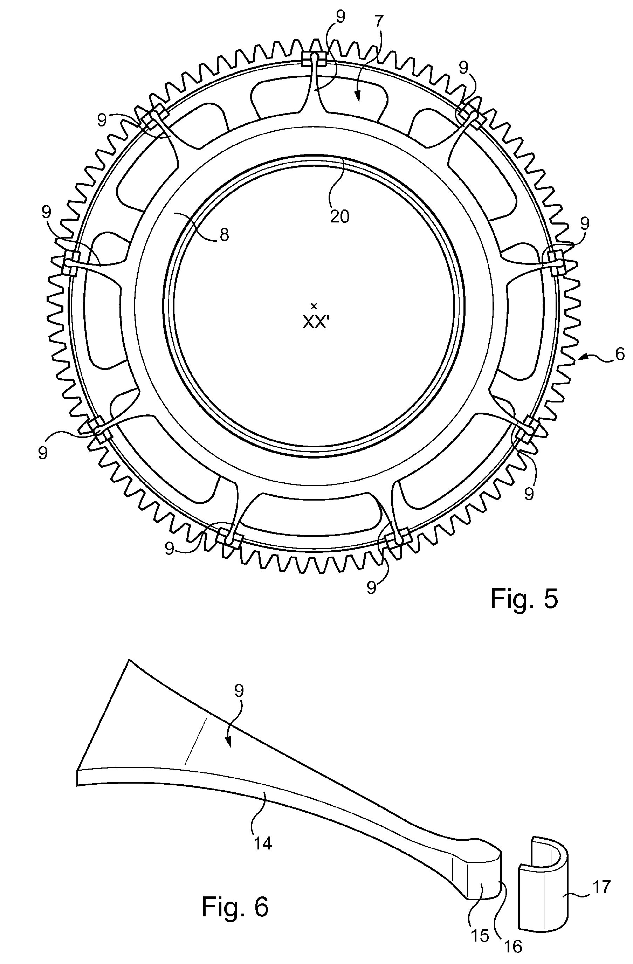

Le dispositif de couplage 7 est une pièce de préférence métallique présentant en plan une forme d'étoile. Elle comprend une partie centrale ou moyeu 8 en forme de disque ou en variante de cuvette, présentant en son centre une ouverture d'axe XX' pour le passage notamment de l'essieu 2, et un certain nombre de bras 9 s'étendant, vus en plan, dans une direction radiale par rapport à l'axe de la partie centrale 8. Dans l'exemple illustré par la figure 5 le dispositif de couplage 7 comporte neuf bras 9.

La partie centrale 8 est fixée au voisinage de son périmètre intérieur 10 coaxialement au pignon de sortie 6 par sertissage, soudage ou tout autre moyen approprié propre à assurer en fonctionnement la transmission du couple moteur entre le pignon 6 et le dispositif de couplage 7.

Le pignon 6 est monté à rotation sur l'essieu 2 au moyen d'un roulement 11. La jante 3 est montée à rotation sur l'essieu 2 au moyen de roulements 12 et 13.

Les bras 9 du dispositif de couplage sont des lames venues de matière avec la partie centrale 8. Vus en plan, les bras ou lames 9 sont plus larges à leur base où ils se raccordent à la partie centrale 8 qu'à leur extrémité par laquelle ils sont accouplés à la jante 3. Le rétrécissement des bras 9 de leur base vers leur extrémité peut se faire selon un profil latéral curviligne 14 comme représenté sur la figure 6. En variante, les bras peuvent avoir une forme sensiblement trapézoïdale avec des flans latéraux rectilignes, ou toute autre forme appropriée. L'épaisseur des bras 9 n'est pas nécessairement uniforme d'une extrémité à l'autre et peut varier de manière continue ou discontinue.

Le matériau et le dimensionnement en largeur et en épaisseur des bras 9 sont choisis de manière à leur conférer :
- en tout point une très grande rigidité dans un plan perpendiculaire à l'axe XX' de la pièce de couplage 7, afin de permettre la transmission de couple entre le pignon 6 et la jante 3,
- une flexibilité appropriée perpendiculairement et suivant d'autres directions transversales à un plan perpendiculaire à l'axe XX' afin de permettre d'absorber les déformations de l'essieu 2 et de la roue 3 lors du roulage de l'avion.

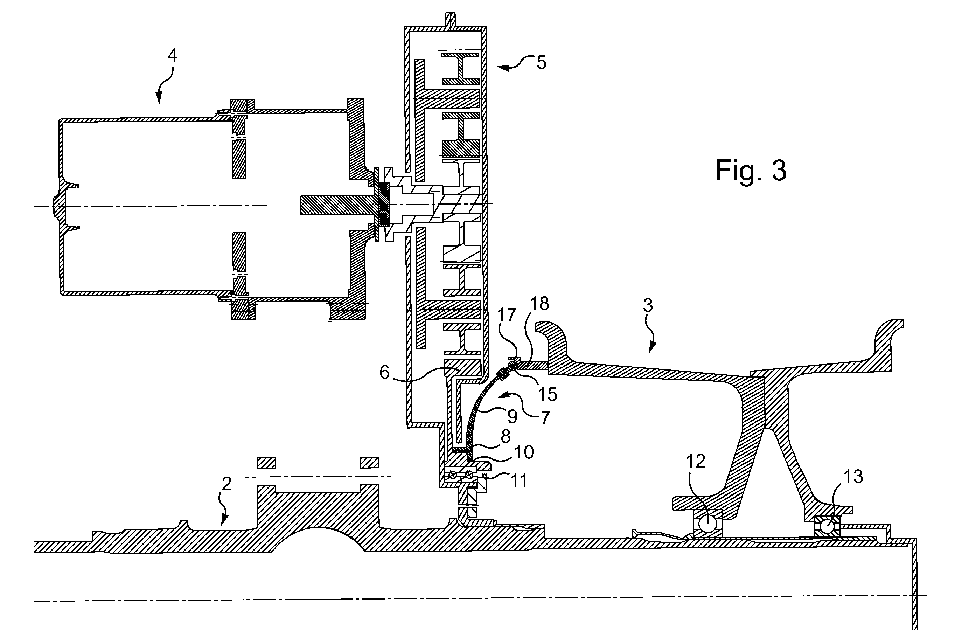

Comme le montre la figure 3, les bras 9 ont dans un plan longitudinal contenant l'axe XX' et passant par leur extrémité un profil incurvé dont la concavité est tournée du côté de l'extrémité de l'essieu 2 recevant la jante 3. Cette courbure est plus ou moins prononcée suivant l'encombrement du mécanisme de freinage (non représenté), en particulier suivant l'importance de son débordement hors du volume dans lequel il est reçu entre l'essieu 2 et le profil intérieur de la jante 3 ouvert vers le pignon de sortie 6.

Afin d'assurer la liaison entre le dispositif de couplage 7 et la jante 3, les bras 9 présentent à leur extrémité un renflement formant une noix 15. Cette noix présente en section transversale (dans un plan perpendiculaire à l'axe XX') un profil sensiblement trapézoïdal ou, en variante, bombé. De préférence, la noix 15 présente une longueur (considérée en coupe dans un plan axial contenant l'axe XX') sensiblement supérieure à l'épaisseur du bras 9. En variante, la noix 15 peut être hémisphérique.

Le profil du bras 9 et celui de la noix 15 sont de préférence choisis pour que l'arête ou la surface radialement extérieure 16 de la noix 15 soit sensiblement parallèle à l'axe XX'. A cet effet le bras comporte le cas échéant une portion de courbure inverse au voisinage de son extrémité portant la noix 15.

Les noix 15 sont adaptées pour être reçues chacune dans un logement 17 en forme de gouttière à section en U dont l'ouverture est dirigée radialement vers l'axe de la jante 3, qui coïncide avec l'axe XX' du dispositif de couplage 7 et de l'essieu 2 dans leur position montée sur ce dernier. Les logements 17 sont orientés parallèlement à l'axe de la jante 3 et ils sont ouverts à leur extrémité qui est tournée vers le dispositif de couplage 7 quand la jante 3 est montée sur l'essieu 2. Par contre, les logements 17 sont fermés à leur extrémité opposée.

Il y a autant de logements 17 que de noix 15. Les logements 17 sont des pièces d'usure rapportées sur une couronne annulaire 18 fixée à la jante 3. La longueur axiale de la couronne 18 est choisie de manière à limiter la courbure des bras 9 dans la mesure compatible avec les contraintes liées à l'encombrement du mécanisme de freinage et du dispositif réducteur 5. Le diamètre de la couronne 18 est adapté pour que les logements 17 soient sensiblement alignés avec les noix 15 et aptes à recevoir celles-ci par un mouvement de translation de la jante 3 lorsque celle-ci est montée dans la position angulaire voulue sur l'essieu 2.

De préférence les dimensions des noix 15 et des logements 17 sont choisies pour qu'il existe un certain jeu lorsque les premières sont reçues dans les seconds. Ce jeu facilite le montage de la roue et le bon travail des bras 9 lorsque l'essieu 2 est soumis à des déformations lors du roulage de l'avion.

Lors du montage d'une roue sur l'essieu 2, le couplage entre la jante 3 et le pignon 6 est effectué très facilement, sans opération supplémentaire autre que le positionnement angulaire de la jante 3 afin d'assurer l'alignement des logements 17 avec les noix 15. Une fois que la jante 3 se trouve montée sur l'essieu 2 avec le serrage requis, les noix 15 sont donc logées dans les logements 17.

Les caractéristiques géométriques et mécaniques du dispositif de couplage 7 sont choisies pour que dans cette position montée de la roue les bras 9 se trouvent mis dans un état de précontrainte. Cette précontrainte du bras 9 est négligeable vis-à-vis de la force avec laquelle la roue doit être serrée. Ainsi, les tables définissant de manière impérative pour chaque type de roue et chaque emplacement d'une roue sur un train d'atterrissage la force de serrage à appliquer n'ont pas à être modifiées.

En fonctionnement, lorsque la jante 3 est entrainée par le moteur 4 via le dispositif réducteur 5 et le dispositif de couplage 7, la roue prend un certain angle de carrossage qui dépend du degré de déformation de l'essieu 2. Cet angle de carrossage peut être accentué par la déformation de la roue elle-même.

La précontrainte et l'élasticité des bras 9 ainsi que la forme allongée des noix 15 et des logements 17 permettent d'assurer que malgré cet angle de carrossage les extrémités de certains des bras 9 n'échappent pas hors des logements 17 et que l'intégralité de la liaison mécanique entre le pignon de sortie 6 et la jante 3 est maintenue en permanence.

Les déformations que subissent en fonctionnement les bras 9 ne compromettent pas la transmission du couple entre le pignon 6 et la jante 3. En effet, dans un plan diamétral les bras 9 sont très peu déformables et présentent par conséquent une très grande rigidité.

Compte-tenu des dimensions des différentes pièces mécaniques en cause et de leurs tolérances de fabrication, il ne serait pas possible d'un point de vue purement géométrique, en l'absence de transmission de couple, que toutes les noix 15 soient en appui dans leur logement 17: une seule des noix 15 peut être en appui dans son logement 17. Cependant, si les bras 9 présentent une très grande rigidité dans un plan diamétral, un système mécanique n'est jamais infiniment rigide et il existe toujours des microdéformations sous l'effet des contraintes. En fonctionnement, ces microdéformations des bras permettent d'assurer que toutes les noix 15 sont en appui dans leur logement respectif et que par conséquent tous les bras 9 participent à la transmission du couple.

La liaison entre la roue et le dispositif de couplage 7 n'affecte pas les opérations conventionnelles de démontage de celle-ci : après desserrage, la roue est retirée par translation sur l'essieu 2, ce qui provoque la sortie des noix 15 hors des logements 17.

Les logements 17 et les noix 15 sont des pièces d'usure amovibles qui peuvent être remplacées.

## Revendications

1. Dispositif élastique de couplage entre une roue de train d'atterrissage d'aéronef et un organe coaxial (6) de motorisation de ladite roue, **caractérisé en ce qu'**il comprend une pluralité de bras (9) solidaires d'un moyeu (8) du côté d'une première extrémité radialement intérieure et adaptés pour être reliés à ladite roue du côté de leur extrémité opposée radialement extérieure, le moyeu (8) étant adapté pour être fixé à l'organe de motorisation (6), les bras (9) étant sensiblement rigides dans un plan perpendiculaire à l'axe de rotation de la roue et flexibles dans des directions sensiblement transversales audit plan en état monté.

2. Dispositif selon la revendication 1, **caractérisé en ce que** lesdits bras (9) sont adaptés pour être reçus, à leur extrémité radialement extérieure, en appui dans des logements respectifs (17) d'une jante (3) de ladite roue.

3. Dispositif selon la revendication 2, **caractérisé en ce que** lesdits logements (17) ont sensiblement une forme de gouttière à section en U ouverte à l'une de ses extrémités et **en ce que** lesdits bras (9) présentent à ladite extrémité radialement extérieure une noix allongée (15) adaptée pour être reçue dans l'un desdits logements (17).

4. Dispositif selon l'une quelconque des revendications 2 et 3, **caractérisé en ce que** lesdits bras (9) sont dimensionnés pour que, dans la position montée de ladite roue sur ledit train d'atterrissage, ils soient précontraints axialement.

5. Dispositif selon les revendications 3 et 4, **caractérisé en ce que** la longueur desdits logements (17) est adaptée pour assurer la retenue desdites noix (15) indépendamment de l'angle de carrossage de ladite roue.

6. Dispositif selon l'une quelconque des revendications 2 à 5, **caractérisé en ce que** lesdits logements sont ménagés dans une couronne (18) solidaire de ladite jante (3).

7. Dispositif selon l'une quelconque des revendications 2 à 6, **caractérisé en ce que** lesdits logements (17) et lesdites noix (15) sont des pièces d'usure amovibles.

8. Dispositif selon l'une quelconque des revendications 1 à 7, **caractérisé en ce que** lesdits bras (9) sont en forme de lames.

9. Dispositif selon la revendication 8, **caractérisé en ce que** lesdites lames (9) ont une section plus faible du côté de leur extrémité radialement extérieure que du côté de leur extrémité radialement intérieure.

10. Roue de train d'atterrissage d'aéronef, **caractérisée en ce qu'**elle est adaptée pour être reliée à des bras (9) d'un dispositif de couplage (7) selon l'une des revendications 1 à 9.

11. Roue selon la revendication 10, **caractérisée en ce qu'**elle est munie de logements (17) adaptés pour recevoir chacun une extrémité radialement extérieure (15) d'un bras (9) du dispositif de couplage.

12. Roue selon la revendication 11, **caractérisée en ce qu'**elle comporte une couronne annulaire (18) portant lesdits logements (17).

13. Train d'atterrissage d'aéronef comprenant au moins une roue et un dispositif (4, 5) de motorisation de ladite roue comportant ledit organe (6), **caractérisé en ce qu'**il comprend un dispositif de couplage (7, 17, 18) selon l'une quelconque des revendications 1à 9.

14. Aéronef, **caractérisé en ce qu'**il comprend au moins un train d'atterrissage selon la revendication 13.

## Patentansprüche

1. Elastische Kupplungsvorrichtung zwischen einem Fahrwerksrad eines Luftfahrzeugs und einem koaxialen Organ (6) zum Antrieb des Rades, **dadurch gekennzeichnet, dass** sie eine Vielzahl von Armen (9) aufweist, welche fest mit einer Nabe (8) auf der Seite eines ersten, radial inneren Endes verbunden ist und dafür angepasst ist, um mit dem Rad auf der Seite seines gegenüberliegenden, radial außen liegenden Endes verbunden zu werden, wobei die Nabe (8) dafür angepasst ist, um an dem Antriebsorgan (6) befestigt zu werden, wobei die Arme (9) im Wesentlichen starr in einer Ebene senkrecht zur Drehachse des Rades sind und elastisch im Wesentlichen quer zu der Ebene verlaufenden Richtungen im montierten Zustand sind.

2. Vorrichtung nach Anspruch 1, **dadurch gekennzeichnet, dass** die Arme (9) dafür angepasst sind, um an ihrem radial äußeren Ende in jeweiligen Aufnahmen (17) einer Felge (3) des Rades abstützend aufgenommen zu werden.

3. Vorrichtung nach Anspruch 2, **dadurch gekennzeichnet, dass** die Aufnahmen (17) im Wesentlichen die Form einer Rinne mit U-förmigem Querschnitt besitzen, welche an einem ihrer Enden offen ist, und dass die Arme (9) an dem radial äußeren Ende eine langgestreckte Nuss (15) aufweisen, welche dafür angepasst ist, in den Aufnahmen (17) aufgenommen zu werden.

4. Vorrichtung nach einem der Ansprüche 2 und 3, **dadurch gekennzeichnet, dass** die Arme (9) dimensioniert sind, damit sie in montierter Position des Rades in dem Fahrwerk axial vorgespannt sind.

5. Vorrichtung nach den Ansprüchen 3 und 4, **dadurch gekennzeichnet, dass** die Länge der Ausnehmungen (17) dafür angepasst ist, um das Zurückhalten der Nüsse (15) unabhängig vom Sturz des Rades zu gewährleisten.

6. Vorrichtung nach einem der Ansprüche 2 bis 5, **dadurch gekennzeichnet, dass** die Ausnehmungen in einem Kranz (18) eingebracht sind, welcher fest mit der Felge (3) verbunden ist.

7. Vorrichtung nach einem der Ansprüche 2 bis 6, **dadurch gekennzeichnet, dass** die Ausnehmungen (17) und die Nüsse (15) abnehmbare Verschleißteile sind.

8. Vorrichtung nach einem der Ansprüche 1 bis 7, **dadurch gekennzeichnet, dass** die Arme (9) in Form von Lamellen ausgebildet sind.

9. Vorrichtung nach Anspruch 8, **dadurch gekennzeichnet, dass** die Lamellen (9) auf der Seite ihres radial äußeren Endes einen schwächeren Querschnitt als auf der Seite ihres radial inneren Endes besitzen.

10. Fahrwerksrad eines Luftfahrzeugs, **dadurch gekennzeichnet, dass** es dafür angepasst ist, um mit den Armen (9) einer Kupplungsvorrichtung (7) nach einem der Ansprüche 1 bis 9 verbunden zu werden.

11. Rad nach Anspruch 10, **dadurch gekennzeichnet, dass** es mit Aufnahmen (17) versehen ist, welche dafür angepasst sind, um jeweils ein radial äußeres Ende (15) eines Arms (9) der Kupplungsvorrichtung aufzunehmen.

12. Rad nach Anspruch 11, **dadurch gekennzeichnet, dass** es einen ringförmigen Kranz (18) aufweist, welcher die Aufnahmen (17) trägt.

13. Fahrwerk eines Luftfahrzeugs, welches mindestens ein Rad und eine Vorrichtung (4, 5) zum Antrieb des Rads aufweist, welche das Organ (6) umfasst, **dadurch gekennzeichnet, dass** es eine Kupplungsvorrichtung (7, 17, 18) nach einem der Ansprüche 1 bis 9 aufweist.

14. Luftfahrzeug, **dadurch gekennzeichnet, dass** es mindestens ein Fahrwerk nach Anspruch 13 aufweist.

## Claims

1. An elastic device for coupling between an aircraft landing gear wheel and a coaxial motorization member (6) for motorization of said wheel, **characterized in that** it comprises a plurality of arms (9) which are joined to a hub (8) at a first radially inner end and which are adapted to be linked to said wheel at their radially outer opposite end, the hub (8) being adapted to be fastened to the motorization member (6), the arms (9) being substantially rigid in a plane perpendicular to the rotational axis of the wheel and flexible in directions substantially transverse to said plane in the mounted state.

2. A device according to claim 1, **characterized in that** said arms (9) are adapted to be received, at their radially outer end, bearing in respective housings (17) of a rim (3) of said wheel.

3. A device according to claim 2, **characterized in that** said housings (17) are substantially the shape of a channel of U-section open at one of its ends and **in that** said arms (9) have at said radially outer end an elongate knob (15) adapted to be received in one of said housings (17).

4. A device according to any one of claims 2 and 3, **characterized in that** said arms (9) are dimensioned such that, in the mounted position of said wheel on said landing gear, they are axially biased.

5. A device according to claims 3 and 4, **characterized in that** the length of said housings (17) is adapted to ensure said knobs (15) are retained independently of the camber angle of said wheel.

6. A device according to any one of claims 2 to 5, **characterized in that** said housings are provided in a ring (18) joined to said rim (3).

7. A device according to any one of claims 2 to 6, **characterized in that** said housings (17) and said knobs (15) are removable parts that are subject to wear.

8. A device according to any one of claims 1 to 7, **characterized in that** said arms (9) are in the form of strips.

9. A device according to claim 8, **characterized in that** said strips (9) are of smaller cross-section at their radially outer end than at their radially inner end.

10. An aircraft landing gear wheel, **characterized in that** it is adapted to be connected to arms (9) of a coupling device (7) according to one of claims 1 to 9.

11. A wheel according to claim 10, **characterized in that** it is provided with housings (17) adapted for each to receive a radially outer end (15) of an arm (9) of the coupling device.

12. A wheel according to claim 11, **characterized in that** it comprises an annular ring (18) carrying said housings (17).

13. An aircraft landing gear comprising at least one wheel and a device (4, 5) for motorization of said wheel comprising said member (6), **characterized in that** it comprises a coupling device (7, 17, 18) according to any one of claims 1 to 9.

14. An aircraft, **characterized in that** it comprises at least one landing gear according to claim 13.
